(19) Europäisches Patentamt
European Patent Office
Office européen des brevets

(11) **EP 4 021 051 A1**

(12) **DEMANDE DE BREVET EUROPEEN**

(43) Date de publication:
**29.06.2022 Bulletin 2022/26**

(21) Numéro de dépôt: **21216488.3**

(22) Date de dépôt: **21.12.2021**

(51) Classification Internationale des Brevets (IPC):
**H04W 12/121** (2021.01)  **G06N 3/04** (2006.01)
**G06N 20/20** (2019.01)  **H04L 9/40** (2022.01)

(52) Classification Coopérative des Brevets (CPC):
**H04L 63/1425; G06N 3/0454; G06N 20/20;
H04L 63/1441; H04W 12/121**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **22.12.2020 FR 2013929**

(71) Demandeur: **Orange
92130 Issy-les-Moulineaux (FR)**

(72) Inventeur: **SEDJELMACI, Hichem
92326 CHÂTILLON CEDEX (FR)**

(54) **PROCEDE D'APPRENTISSAGE COLLABORATIF ENTRE UNE PLURALITE DE NOEUDS D'UN RESEAU D'UN MODELE DE DETECTION D'ANOMALIES**

(57) L'invention concerne un procédé d'apprentissage collaboratif, entre une pluralité de noeuds appartenant à un réseau de télécommunications, d'un modèle comportemental dit global destiné à être utilisé par chaque noeud pour détecter des anomalies affectant ce réseau, ce procédé étant mis en oeuvre par chaque noeud de la pluralité de noeuds et comprenant, lorsque de nouvelles données d'apprentissage sont disponibles au niveau de ce noeud (E10) :
- une étape (E70) de mise à jour, à partir desdites nouvelles données d'apprentissage, d'un modèle comportement dit local maintenu par ledit noeud ;
- une étape (E80) d'échange avec les autres nœuds de ladite pluralité de nœuds d'informations représentatives des mises à jour des modèles comportementaux locaux maintenus respectivement par ladite pluralité de nœuds ; et
- une étape (E90) de mise à jour du modèle comportement global à partir des informations échangées.

[Fig 4]

EP 4 021 051 A1

## Description

## Technique antérieure

L'invention se rapporte au domaine général des communications.

Elle concerne plus particulièrement la sécurité des réseaux de communications et la protection de ces derniers contre des attaques informatiques aussi communément appelées cyber-attaques. Elle peut s'appliquer aisément à tout type de réseaux de communications, et en particulier aux réseaux de communications définis par le standard 3GPP comme par exemple les réseaux de 5ème Génération (ou réseaux 5G).

Jusqu'à la 4ème génération, les architectures de réseau définies par le standard 3GPP reposent le plus souvent sur des équipements spécifiques, dédiés à des fonctionnalités précises, que ce soit au niveau du réseau d'accès ou du cœur de réseau, notamment en ce qui concerne la transmission de paquets depuis ou à destination d'un terminal mobile. Le manque de flexibilité et d'évolutivité inhérent à ce type d'architecture a conduit le standard 3GPP à envisager l'adoption d'architectures plus flexibles pour la 5ème génération de réseaux sans fil, afin de pouvoir répondre rapidement à des demandes extrêmement diverses en termes de trafic et/ou de qualité de service envisagées par les réseaux 5G (Internet des Objets (ou IoT pour « Internet Of Things »), accès large bande dans des réseaux denses, etc.). Il est à noter que les réseaux 5G ont vocation à concerner aussi bien les réseaux mobiles que les réseaux fixes.

Parmi les solutions envisagées, une des solutions les plus prometteuses repose sur une technique de découpage par tranches du réseau ou « network slicing ». Cette technique est décrite notamment dans la spécification technique 3GPP TS 23.501 v15.7.0, septembre 2019. Elle permet à l'opérateur d'un réseau de créer des réseaux logiques de bout-en-bout sur mesure et indépendants pour ses clients, à partir d'une même infrastructure de réseau physique (réseau(x) d'accès, réseau cœur, etc.), capables de fournir des solutions optimisées pour des scénarii variés correspondant à des contraintes diverses en termes de fonctionnalités, de performances et de qualités de service. Plus spécifiquement, le concept de tranches de réseau permet de créer plusieurs instances de réseau aussi appelées « network slices » en anglais. Une tranche de réseau est composée de fonctions réseaux, de ressources matérielles (par exemple de stockage et de calcul, d'accès, etc.) et de configurations permettant de satisfaire les exigences liées aux services, aux clients et/ou terminaux rattachés à cette tranche.

Les différentes tranches de réseau peuvent donner accès à des réseaux de données distincts ou à un même réseau de données. Chaque tranche de réseau peut être apparentée à un réseau sans fil distinct, et est déterminée par les caractéristiques des flux de données transitant par cette tranche de réseau, qui présentent des points communs en termes par exemple de destination, d'acheminement, et de contraintes de sécurité, justifiant une gestion commune au sein d'une même tranche de réseau. Chacune des tranches est ainsi optimisée pour les besoins d'un type de service et/ou d'un type de client et/ou de terminaux. Un même terminal peut être connecté à des tranches de réseau distinctes.

Dans ce contexte de « network slicing », les réseaux sans fil 5G, du fait notamment des techniques de communication avancées mises en œuvre et des capacités nouvelles offertes en matière notamment de débits, de volumes d'information et de connexion, ouvrent des perspectives d'usage inédites qui posent de véritables challenges en termes de cyber sécurité et de détection d'anomalies.

Pour assurer la sécurité de ce type de réseaux, il est connu d'utiliser des techniques de détection d'attaques informatiques ou plus généralement d'anomalies s'appuyant sur des méthodes d'apprentissage automatique (ou « Machine Learning » en anglais), telles que des méthodes s'appuyant sur un apprentissage supervisé, non supervisé, profond, par renforcement, etc. Ce type de techniques de détection d'anomalies permet d'améliorer significativement la fiabilité de détection : elle offre en effet la possibilité de détecter des attaques polymorphes et inconnues, et donc de faire face au nombre grandissant et à la diversité des attaques informatiques susceptibles d'affecter les réseaux de communications.

Ces méthodes d'apprentissage automatique s'appuient sur un modèle comportemental définissant un comportement « normal » du trafic transitant par le réseau (c'est-à-dire en l'absence d'attaque informatique). Ce modèle comportemental doit être entraîné (« appris »), au moyen de données dites d'apprentissage, afin de caractériser de façon convenable un comportement normal du trafic. Lors de la phase de détection d'anomalies, une activité dans le réseau sera identifiée comme anormale dès lors qu'une déviation par rapport au modèle comportemental obtenu supérieure à un certain seuil est détectée.

Compte-tenu de la diversité et de la complexité du trafic pouvant être échangé au sein des réseaux de communication actuels et notamment dans les réseaux 5G, on comprend bien qu'un défi auquel sont confrontés les spécialistes de la cyber-sécurité aujourd'hui consiste notamment en la disponibilité, la sécurisation et l'exploitation des données d'apprentissage permettant d'apprendre les modèles comportementaux utilisés par les techniques de détection d'anomalies basées sur l'apprentissage automatique. Ces tâches requièrent en effet beaucoup de ressources (matérielles et logicielles) et sont particulièrement chronophages. Par ailleurs, les données d'apprentissage sont des données relativement sensibles et critiques, des tiers malveillants pouvant les exploiter pour concevoir des attaques laissant impuissantes les techniques de détection apprises à partir de ces données d'apprentissage.

Pour résoudre ce problème, le document de J.

Konecny et al. intitulé « Federated Optimization: Distributed Machine-Learning for On-Device Intelligence », arXiv preprint arXiv :1610.02527v1, 8 octobre 2016, propose une approche collaborative dite d'apprentissage fédéré, dans laquelle une pluralité de noeuds, par exemple des terminaux mobiles d'un réseau, disposent localement de données d'apprentissage et utilisent ces données d'apprentissage locales pour apprendre chacun, indépendamment les uns des autres, un modèle comportemental local. Les paramètres des modèles locaux appris individuellement par les terminaux mobiles sont ensuite fournis à un serveur central de coordination, par exemple une station de base du réseau, qui, à partir de ces paramètres, dérive un modèle comportement global qu'il partage ensuite avec les terminaux mobiles.

Cette approche, par opposition à une approche totalement centralisée, permet de préserver la sécurité des données d'apprentissage et de limiter les quantités de données échangées sur le réseau pour obtenir le modèle comportemental global : les données d'apprentissage collectées par les terminaux mobiles sont stockées localement au niveau de ces terminaux et ne sont pas transmises en l'état au serveur central de coordination via le réseau.

Toutefois, comme souligné dans le document de J. Konecny et al., cette approche s'appuie sur l'hypothèse que le serveur central de coordination est une entité de confiance. Si le serveur central de coordination fait l'objet d'une attaque de la part d'un tiers malveillant, alors le modèle comportemental global déterminé par le serveur central de coordination et fourni aux terminaux mobiles en vue d'être appliqué par ces derniers pour détecter des anomalies peut être affecté et conduire à de fausses détections, ce qui peut s'avérer préjudiciable pour la sécurité du réseau.

**Exposé de l'invention**

L'invention permet notamment de pallier cet inconvénient en proposant un procédé d'apprentissage automatique collaboratif, entre une pluralité de noeuds appartenant à un réseau de télécommunications, d'un modèle comportemental dit global destiné à être utilisé par chaque nœud pour détecter des anomalies affectant ledit réseau, ledit procédé étant mis en oeuvre par chaque nœud de ladite pluralité de nœuds et comprenant, lorsque de nouvelles données d'apprentissage sont disponibles au niveau de ce nœud :

- une étape de mise à jour, à partir desdites nouvelles données d'apprentissage, d'un modèle comportement dit local maintenu par ledit nœud ;
- une étape d'échange avec les autres nœuds de ladite pluralité de nœuds d'informations représentatives des mises à jour des modèles comportementaux locaux maintenus respectivement par ladite pluralité de nœuds ; et
- une étape de mise à jour du modèle comportement global à partir des informations échangées.

Corrélativement, l'invention propose aussi un nœud parmi une pluralité de nœuds appartenant à un réseau de télécommunications, comprenant un module de détection d'anomalies, configuré pour exécuter une technique de détection d'anomalies utilisant un modèle comportemental dit global, ledit nœud comprenant en outre un module d'apprentissage, configuré pour réaliser un apprentissage collaboratif dudit modèle comportemental global avec d'autres nœuds de ladite pluralité de nœuds, ledit module d'apprentissage étant activé lorsque de nouvelles données d'apprentissage sont disponibles au niveau dudit nœud, et étant configuré pour :

- mettre à jour, à partir desdites nouvelles données d'apprentissage, un modèle comportemental dit local maintenu par ledit nœud ;
- échanger avec les autres nœuds de ladite pluralité de nœuds d'informations représentatives des mises à jour des modèles comportementaux locaux maintenus respectivement par ladite pluralité de nœuds ; et
- mettre à jour le modèle comportemental global à partir des informations échangées.

Aucune limitation n'est attachée à la nature du nœud du réseau mettant en œuvre l'invention. Il peut s'agir d'un équipement du réseau à proprement parler, comme par exemple un point d'accès au réseau (ex. une station de base, node B, eNodeB, gNodeB, etc.), un serveur de calcul (ou de traitement) périphérique, une fonction réseau virtualisée ou physique, etc., mais également un équipement auquel le réseau fournit une connectivité, comme par exemple un équipement utilisateur tel qu'un terminal, un objet connecté, etc. De même au sens de l'invention, le réseau peut être constituée d'un ou de plusieurs sous-réseaux gérés par une même entité administrative (ex. opérateur) ou par des entités administratives différentes.

Ainsi, l'invention propose une nouvelle approche collaborative entre différents nœuds d'un réseau. Selon cette approche, chaque nœud apprend, à partir de ses propres données d'apprentissage, un modèle comportemental local et échange ce modèle local avec les autres nœuds : de cette sorte, chaque nœud est en mesure, à l'issue de cet échange, de déterminer un modèle comportemental global en agrégeant les différents modèles comportementaux locaux déterminés par la pluralité de nœuds. De cette façon, on assure, comme dans l'approche d'apprentissage fédéré décrite dans le document de J. Konecny et al. la sécurité et la confidentialité des données d'apprentissage disponibles au niveau de chaque nœud, puisqu'elles ne sont pas échangées entre les nœuds du réseau, tout en s'assurant que chaque nœud dispose d'un modèle comportemental global performant et précis lui permettant de réaliser une détection d'anomalies et de surveiller efficacement le réseau. Chaque nœud étant configuré pour déterminer lui-même ce modèle comportemental global, on limite ainsi les risques de corruption de ce modèle comportemental global, et on améliore la sécurité de l'approche d'apprentissage fédéré.

Aucune limitation n'est attachée à la technique de détection d'anomalies appliquée par les nœuds de la pluralité de nœuds considérée pour surveiller le réseau et exploitant le modèle comportemental global déterminé grâce à l'invention. Ainsi, le modèle comportemental global obtenu conformément à l'invention peut être utilisé par chaque nœud pour mettre en œuvre différents types d'algorithmes d'apprentissage automatique ou algorithmes ML (pour « Machine Learning » en anglais) tels qu'un algorithme d'apprentissage automatique supervisé, non-supervisé ou encore par renforcement.

Dans un mode particulier de réalisation, un tel algorithme d'apprentissage automatique peut être un algorithme d'apprentissage supervisé de type machine à vecteurs de support ou séparateur à vaste marge (ou encore SVM pour « Support Vector Machine » en anglais).

L'utilisation d'un algorithme SVM pour la détection d'anomalies dans un réseau de télécommunications et notamment dans un réseau 5G est particulièrement avantageuse car ce type d'algorithme introduit une faible latence lors de l'apprentissage et de la détection (par rapport à un algorithme de type réseau de neurones par exemple). On note qu'on peut considérer un algorithme SVM binaire ou multi-classes selon la précision de détection que l'on souhaite.

Toutefois bien entendu, d'autres algorithmes peuvent être envisagés en variante, comme par exemple un réseau de neurones, un algorithme d'apprentissage par renforcement, un algorithme des k plus proches voisins, etc.

Dans un mode particulier de réalisation, pour au moins un dit modèle comportemental local, les informations représentatives de la mise à jour de ce modèle comportemental local sont des paramètres définissant ce modèle comportemental local après la mise à jour ou une variation de ces paramètres en raison de la mise à jour.

De cette sorte, on limite la quantité d'informations échangée entre les nœuds.

Ainsi, à titre illustratif, dans l'exemple de l'algorithme SVM cité précédemment, les paramètres échangés sont les paramètres permettant de définir l'hyperplan séparateur considéré pour la classification dans l'algorithme SVM. Pour un réseau de neurones, les paramètres échangés comprennent la topologie des connexions entre les neurones, le résultat de la fonction de pondération utilisée (ex. somme pondérée, distance pseudoeuclidienne, etc.), le résultat de la fonction de seuillage utilisée (ex. sigmoïde, échelon, fonction linéaire, fonction de Gauss, etc.).

Dans un mode de réalisation particulier de l'invention, l'étape de mise à jour du modèle comportemental local comprend l'exécution par ledit nœud d'un algorithme de descente de gradient stochastique (ou « Stochastic Gradient Descend » en anglais).

Un tel algorithme est connu en soi et facile à mettre en œuvre. Son utilisation permet de réduire la complexité de mise en œuvre de l'invention au niveau de chaque nœud.

Bien entendu, il ne s'agit que d'un exemple et d'autres algorithmes peuvent être envisagés lors de la mise à jour du modèle comportemental global, comme par exemple un algorithme de descente de gradient, un algorithme de descente coordonnée randomisée (ou « Randomized Coordinate Descent » en anglais), etc. De tels algorithmes sont décrits notamment dans le document de J. Konecny et al. cité précédemment.

Dans un mode particulier de réalisation, le procédé comprend une étape d'initialisation du modèle comportemental global comportant :

- une étape d'obtention de données d'apprentissage en provenance desdits autres nœuds de ladite pluralité de nœuds ; et
- une étape d'apprentissage du modèle comportemental global à partir de données d'apprentissage disponibles au niveau dudit nœud et desdites données d'apprentissage obtenues desdits autres nœuds.

Cette étape d'initialisation permet une convergence plus rapide du modèle comportemental global vers un modèle performant permettant une détection d'anomalies précise et efficace.

Le modèle global obtenu grâce à l'invention permet de détecter de nombreuses anomalies et attaques informatiques. Bien entendu, la diversité des attaques pouvant être détectées dépend des données d'apprentissage collectées par les noeuds considérés pour mettre en oeuvre l'invention et avec lesquelles sont entraînés les modèles locaux et global. Ces données d'apprentissage peuvent porter notamment sur au moins un attribut ou une caractéristique parmi un nombre de paquets perdus par unité de temps, un nombre de paquets envoyés par unité de temps, un nombre de points d'accès communiquant simultanément avec un serveur de calcul périphérique du réseau, un nombre de serveurs de calcul périphérique communiquant simultanément avec une fonction du réseau déterminée, un temps de transmission d'un paquet de données, une longueur de données brutes transmises, un nombre de paquets de signalisation envoyés par unité de temps par un équipement utilisateur, un nombre de paquets perdus par seconde par un point d'accès audit réseau, une longueur de messages, un nombre d'équipements utilisateurs connectés à un point d'accès audit réseau, une latence perçue par un équipement utilisateur, un débit moyen perçu par un équipement utilisateur, une distribution d'un type de messages déterminé, un puissance de signal d'un équipement utilisateur, un nombre de paquets émis par seconde, et/ou une latence de bout-en-bout dans le réseau.

Ces différents attributs et caractéristiques permettent de détecter notamment des attaques de type déni de service (ou DoS pour « Denial of Service » en anglais), réseau de bots informatiques (ou « Botnet » en anglais), ou encore injection de fausses données (ou FDI pour « False Data Injection » en anglais). Ces attaques sont connues comme étant les attaques les plus dangereuses aujourd'hui susceptibles de cibler un réseau de télécommunications et notamment un réseau 5G implémentant du « network slicing ». Bien entendu, ces exemples ne sont donnés qu'à titre illustratif, et d'autres attributs et/ou caractéristiques peuvent être envisagés ainsi que d'autres attaques.

Dans un mode particulier de réalisation de l'invention, le procédé d'apprentissage collaboratif est mis en oeuvre par un ordinateur.

L'invention vise également un programme d'ordinateur sur un support d'enregistrement, ce programme étant susceptible d'être mis en oeuvre dans un ordinateur ou plus généralement dans un nœud d'un réseau conforme à l'invention et comporte des instructions adaptées à la mise en oeuvre d'un procédé d'apprentissage collaboratif tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions du programme d'ordinateur mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'informations ou d'enregistrement peut être un circuit intégré dans lequel un programme est incorporé, le circuit étant adapté pour exécuter ou pour être utilisé dans l'exécution du procédé d'apprentissage collaboratif, conforme à l'invention.

Comme il apparaît au vu de ce qui précède, la finalité du modèle comportemental global appris conformément à l'invention est son utilisation par les noeuds de la pluralité de noeuds considérée pour surveiller et protéger le réseau contre de potentielles attaques informatiques. Ainsi, selon un autre aspect, l'invention vise également un procédé de surveillance par un nœud appartenant à une pluralité de noeuds d'un réseau de télécommunications, comprenant :

- une étape d'apprentissage d'un modèle comportemental global au moyen d'un procédé d'apprentissage collaboratif entre ladite pluralité de noeuds conforme à l'invention ; et
- une étape d'exécution d'une technique de détection d'anomalies utilisant ledit modèle comportemental global.

Corrélativement, l'invention concerne aussi un système collaboratif comprenant une pluralité de noeuds conformes à l'invention.

Le procédé de surveillance et le système collaboratif présentent les mêmes avantages que le procédé d'apprentissage et le nœud selon l'invention, évoqués précédemment.

Dans un mode particulier de réalisation, le procédé de surveillance comprend, si une anomalie est détectée lors de ladite étape d'exécution, une étape de notification d'une fonction déterminée du réseau de l'anomalie détectée, cette notification indiquant au moins un attribut et/ou une caractéristique d'une ressource surveillé(e) par ledit nœud associé(e) à l'anomalie détectée.

Ainsi, dans un mode particulier de réalisation, suite à l'étape de notification, le procédé de surveillance peut comprendre :

- une étape de réception en provenance de ladite fonction déterminée du réseau, de nouveaux éléments comprenant de nouvelles données d'apprentissage, et/ou de nouveaux attributs et/ou caractéristiques (ex. de ressources du réseau, comme par exemple du trafic, etc.) à surveiller ; et
- une étape de déclenchement du procédé d'apprentissage collaboratif selon l'invention exploitant lesdits nouveaux éléments.

Une telle fonction est par exemple une fonction du réseau gérant plusieurs nœuds conformes à l'invention. Une approche hiérarchique pour la protection du réseau est ainsi proposée : selon cette approche hiérarchique, lorsqu'un nœud détecte une anomalie, il la fait remonter à une entité située à un niveau hiérarchique supérieur, typiquement en liaison avec plusieurs nœuds de ladite pluralité de nœuds (voire avec l'ensemble des nœuds de la pluralité de nœuds). De cette sorte, l'entité en question dispose d'une plus grande visibilité sur le réseau et le trafic échangé au sein de ce réseau, et donc *in fine,* sur les attaques ciblant les ressources du réseau. Cette entité peut alors infirmer ou confirmer l'anomalie détectée, prendre des dispositions en cas d'attaque avérée, et transmettre aux nœuds de la pluralité de nœuds situés au niveau hiérarchique inférieur de nouveaux éléments pour améliorer leurs détections (via le déclenchement d'un nouvel apprentissage collaboratif exploitant ces nouveaux éléments).

Comme mentionné précédemment, l'invention a une application privilégiée dans le cadre de réseaux mobiles et notamment d'un réseau 5G. Dans ce contexte (mais cela s'applique également à d'autres générations ou types de réseaux), on peut envisager qu'une pluralité de nœuds selon l'invention sont embarqués dans des serveurs de calcul (ou de traitement) périphérique (tels que des serveurs conformes à la norme MEC, pour « Multi-Access Edge Computing » en anglais, d'un réseau 5G) du réseau et au moins un nœud selon l'invention est embarqué dans une entité de gestion de la mobilité et de l'accès (telle qu'une entité ou fonction AMF, pour « Access and Mobility Function » en anglais, d'un réseau 5G), le nœud embarqué dans l'entité de gestion de la mobilité et de l'accès jouant le rôle de la fonction réseau déterminée vers laquelle les nœuds embarqués dans les serveurs de calcul périphérique remontent les notifications d'alerte.

De cette sorte, les nœuds selon l'invention peuvent coopérer efficacement pour protéger le réseau, et en particulier, dans l'exemple d'un réseau 5G, les tranches de réseau (« network slices ») supportées par ce réseau. On note que le choix d'embarquer un nœud selon l'invention dans l'entité de gestion de la mobilité et de l'accès AMF est guidé par le fait que dans les réseaux 3GPP, cette entité est la première fonction du réseau cœur qui interagit avec les éléments périphériques et est reliée aux autres fonctions du réseau cœur comme par exemple, dans le contexte d'un réseau 5G, aux fonctions NSSF (pour « Network Slice Selection Function » en anglais) de sélection d'une tranche de réseau, UDM (pour « Unified Data Management » en anglais) de traitement unifié des données, SMF (pour « Session Management Function » en anglais) de gestion de session, PCF (pour « Policy Control Function » en anglais) de contrôle de politiques, etc. En outre, l'entité AMF est, selon les experts en cyber-sécurité, l'une des fonctions réseau les plus attractives pour les attaques informatiques en raison de son rôle crucial dans l'architecture des réseaux coeurs 5G et des données sensibles qu'elle gère.

Le système collaboratif selon l'invention peut en outre comprendre une entité de confiance configurée pour effectuer une vérification des anomalies détectées par la pluralité de noeuds et/ou fournir audit au moins un nœud embarqué dans l'entité de gestion de la mobilité et de l'accès du réseau de nouveaux éléments parmi de nouvelles données d'apprentissage et/ou de nouveaux attributs et/ou caractéristiques à surveiller.

Une telle entité de confiance est par exemple un centre d'opérations et de sécurité ou SOC (pour « Security Operation Center »). Elle est généralement située dans le réseau cœur et a une visibilité plus importante sur le réseau, et donc *in fine* le cas échéant, sur chaque tranche de réseau, bénéficiant des informations remontées par les différents nœuds participant à la sécurité du réseau déployés dans celui-ci.

Le système selon l'invention propose ainsi une solution permettant de protéger efficacement le réseau contre des attaques externes et/ou internes, et qui peut s'adapter de façon réactive au fil du temps à l'apparition de nouvelles attaques.

Par exemple, l'entité de confiance peut être configurée pour fournir les nouveaux éléments précités lorsque qu'elle invalide au moins une anomalie détectée par un nœud.

Par exemple, ces nouveaux éléments peuvent être utilisés par le nœud en question pour mettre à jour son modèle comportemental local et le modèle comportemental global. Ceci permet d'améliorer la fiabilité, la précision et la pertinence du modèle comportemental global utilisé par les nœuds de la pluralité de nœuds pour détecter des anomalies dans le réseau.

Dans un mode particulier de réalisation du système collaboratif selon l'invention, chaque nœud de la pluralité de nœuds est associé à une valeur de confiance, cette valeur de confiance étant mise à jour en fonction des détections effectuées par le nœud et de leur validité. Ces valeurs de confiance permettent avantageusement de déterminer si un nœud est fiable ou non, et ainsi de détecter les nœuds potentiellement ciblés par une attaque informatique et de prendre des mesures appropriées.

Ce mode de réalisation permet ainsi de gérer des attaques affectant directement les équipements déployés dans le réseau pour le protéger.

On peut également envisager, dans d'autres modes de réalisation, que le procédé d'apprentissage collaboratif, le procédé de surveillance, le nœud d'un réseau et le système collaboratif selon l'invention présentent en combinaison tout ou partie des caractéristiques précitées.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente un système collaboratif conforme à l'invention dans un mode particulier de réalisation ;
[Fig. 2] la figure 2 représente un exemple d'architecture matérielle d'un équipement hébergeant un nœud DS du système collaboratif 1, conforme à l'invention, dans un mode particulier de réalisation ;
[Fig. 3] la figure 3 représente les blocs fonctionnels d'un nœud DS du système collaboratif 1, dans un mode particulier de réalisation ;
[Fig. 4] la figure 4 illustre les principales étapes d'un procédé d'apprentissage collaboratif selon l'invention, dans un mode particulier de réalisation dans lequel il est mis en œuvre par chaque nœud DS du système collaboratif de la figure 1 ;

[Fig. 5] la figure 5 illustre les principales étapes d'un procédé de surveillance selon l'invention, dans un mode particulier de réalisation dans lequel il est mis en œuvre par chaque nœud DS du système collaboratif de la figure 1.

## Description de l'invention

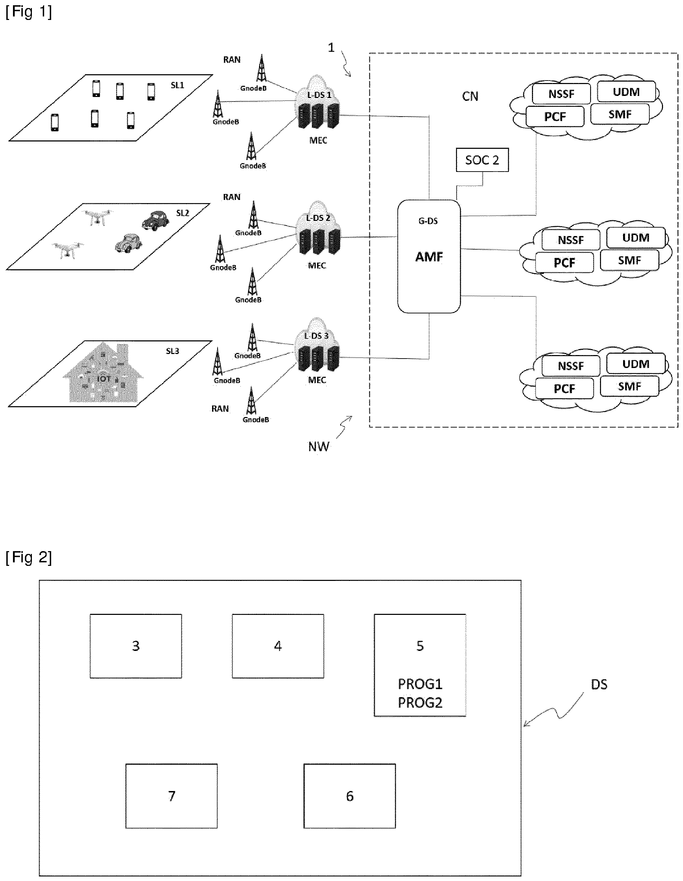

**La figure 1** représente, dans son contexte, un système collaboratif 1 selon l'invention, dans un mode particulier de réalisation dans lequel le système collaboratif 1 est déployé pour assurer la protection, contre des attaques informatiques (ou cyber-attaques), d'un réseau NW de communications 5G mettant en œuvre une technique de découpage en tranches (ou « network slicing » en anglais).

Les attaques informatiques traquées par le système collaboratif 1 peuvent cibler directement ou indirectement diverses ressources du réseau NW (ex. ressources de calcul, serveurs, ressources mémoire, trafic échangé, etc.), et provenir d'attaquants internes ou externes au réseau NW.

Au sens de l'invention, un réseau peut être constitué d'un ou de plusieurs réseaux ou sous-réseaux, gérés par des entités administratives (ex. opérateurs) identiques ou distinctes. Ainsi, dans l'exemple envisagé ici, le réseau NW comprend un cœur de réseau ou réseau cœur CN (pour « Core Network » en anglais), un ou plusieurs réseaux d'accès RAN (pour « Radio Access Network » en anglais) permettant d'accéder au réseau cœur CN par l'intermédiaire d'un ou plusieurs points d'accès. Aucune limitation n'est attachée à la nature des réseaux d'accès (ex. GSM, UMTS, LTE, WLAN, etc.) ni *in fine* à la nature des points d'accès permettant d'accéder à ces réseaux d'accès (ex. station de base, NodeB, eNodeB, gNodeB, etc.).

En outre, on suppose ici que le réseau NW utilise une approche dite d'informatique en périphérie, plus communément connue sous l'appellation anglaise de « edge computing ». Cette technologie, basée ici sur la norme MEC (pour « Multi-access Edge Computing »), consiste à déporter l'analyse, le traitement et le stockage de certaines données et/ou applications à la périphérie du réseau (dans un réseau dit de périphérie) plutôt que d'effectuer ces tâches dans des centres de données ou dans un cloud, parfois situés à plusieurs milliers de kilomètres des sources de ces données et/ou applications. Ce traitement décentralisé au plus près des sources des données et/ou applications permet avantageusement d'optimiser les besoins en bande passante, de limiter la transmission de nombreuses données et/ou applications vers les centres de données ou vers le « cloud » (et incidemment les fuites et/ou les problèmes de sécurité pouvant résulter de cette transmission), et de garantir une certaine fluidité et une rapidité de réaction. On limite ainsi la latence et les délais associés au traitement des données et/ou applications, et offre une performance en temps réel notamment aux applications large bande. Il en résulte une meilleure expérience utilisateur. On comprend bien dès lors que le recours à un tel réseau de périphérie a un intérêt privilégié dans le contexte des réseaux de communication 5G, et notamment de l'Internet des Objets (ou IoT pour « Internet of Things), dans lequel on assiste à une croissance exponentielle du trafic et à une explosion du nombre d'objets connectés au réseau.

Dans l'exemple illustré à la figure 1, on considère trois tranches de réseau représentant chacune un réseau sans fil, et s'appuyant sur l'infrastructure du réseau NW : une tranche SL1 supportant des services mobiles hauts débits (ou « broadband »), une tranche SL2 supportant des services critiques comme par des services de télémédecine, de véhicules connectés autonomes, Industrie 4.0, etc., et une tranche SL3 supportant des services de type Internet des Objets (ou IoT pour « Internet of Things » en anglais).

Plus particulièrement, les tranches de réseau SL1, SL2 et SL3, se partagent des infrastructures RAN de réseaux d'accès, des infrastructures MEC de réseaux de périphérie, ainsi que des fonctions réseau virtuelles ou des groupes de fonctions réseau virtuelles du réseau cœur CN du réseau NW. De telles fonctions réseaux virtuelles sont par exemple des fonctions de routage, d'adressage, de contrôle de flux de données, de nommage, etc. Dans l'exemple de la figure 1, on considère plus particulièrement les fonctions réseau virtuelles AMF, SMF, UPF, NSSF et PCF déjà évoquées précédemment.

Pour sécuriser le réseau NW, et plus particulièrement ici, chaque tranche de réseau SL1, SL2, SL3, le réseau NW s'appuie, comme mentionné ci-avant, sur le système collaboratif 1 selon l'invention. Dans le mode de réalisation décrit ici, le système collaboratif 1 comprend une pluralité de noeuds conformes à l'invention, référencés de manière générale par DS (ou par DS1, DS2,..., DSN, N désignant un entier supérieur à 1), configurés pour surveiller des ressources du réseau NW (équipements physiques, ressources mémoire, ressources de calcul, trafic échangé, etc.) et en particulier, détecter des anomalies dans le trafic échangé sur ou transitant via le réseau NW par l'intermédiaire de ces ressources. Les nœuds DS sont hébergés par diverses entités du réseau NW.

Plus particulièrement, la pluralité de nœuds DS comprend ici des nœuds L-DS embarqués dans des serveurs des réseaux de périphérie MEC (un nœud par tranche : L-DS1 pour la tranche SL1, L-DS2 pour la tranche SL2, L-DS3 pour la tranche SL3), et un nœud G-DS embarqué dans une entité de gestion de la mobilité et de l'accès (fonction AMF) du réseau cœur CN. Le système collaboratif 1 comprend également un centre d'opérations de sécurité 2, plus communément désigné par SOC 2, et considéré de façon connue en soi, comme une entité de confiance du réseau NW. On note qu'une configuration différente peut être envisagée pour les nœuds DS : en particulier, on peut envisager plusieurs nœuds G-DS embarqués par plusieurs fonctions du réseau cœur CN.

Dans le mode de réalisation décrit ici, chaque nœud DS (L-DS ou G-DS) conforme à l'invention, s'appuie sur l'architecture matérielle de l'équipement physique dans lequel il est embarqué. Cette architecture matérielle est représentée schématiquement sur la **figure 2**. Elle comprend notamment un processeur 3, une mémoire vive 4, une mémoire morte 5, une mémoire non volatile 6 et des moyens de communications 7 qui permettent à chacun des nœuds DS de communiquer entre eux, et de communiquer le cas échéant avec d'autres équipements du réseau NW, comme par exemple avec le SOC 2. On note que dans le mode de réalisation décrit ici, les moyens de communications 7 mettent en œuvre le protocole sécurisé TLS (Transport Layer Security) lors des échanges entre les nœuds DS.

La mémoire morte 5 est un support d'information sur lequel sont enregistrés des programmes d'ordinateur PROG1 et PROG2, lisibles par le processeur 3, et comportant respectivement des instructions pour l'exécution d'un procédé d'apprentissage collaboratif et d'un procédé de surveillance selon l'invention.

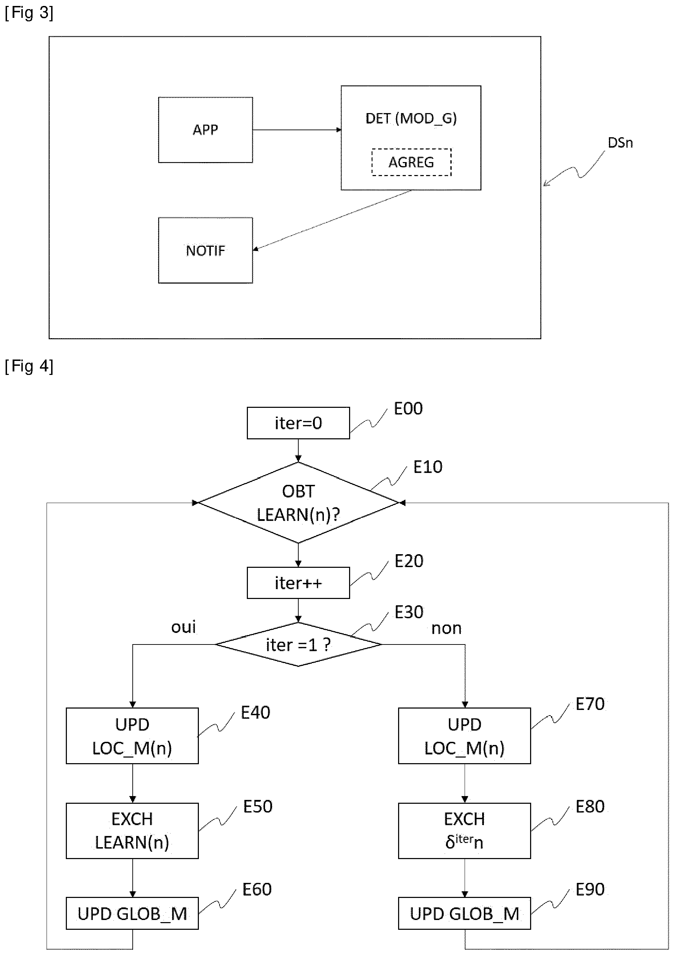

Les programmes PROG1 et PROG2 définissent des modules fonctionnels de chaque nœud DS conforme à l'invention (L-DS ou G-DS) qui s'appuient sur ou commandent les éléments matériels 3 à 7 évoqués ci-avant. Ces modules comprennent notamment ici, pour chaque nœud DSn indexé par l'entier n=1,...,N, comme illustré sur la **figure 3** :

- un module APP d'apprentissage, configuré pour réaliser un apprentissage collaboratif d'un modèle comportemental global noté GLOB_M(n) avec les autres nœuds DSk, du système collaboratif 1, k désignant un entier supérieur ou égal à 1, différent de n. Le module APP d'apprentissage est activé notamment lorsque de nouvelles données d'apprentissage sont disponibles au niveau du nœud DSn, et est configuré pour :

   ○ mettre à jour, à partir de ces nouvelles données d'apprentissage, un modèle comportemental dit local LOC_M(n) maintenu par le nœud DSn, et mémorisé par exemple dans la mémoire non volatile 6 ;
   ○ échanger avec les autres nœuds DSk, k≠n, du système collaboratif 1, des informations représentatives des mises à jour des modèles comportementaux locaux maintenus respectivement par les différents nœuds DS ; et
   ○ mettre à jour le modèle comportemental global GLOB_M(n) à partir des informations échangées. On note qu'à l'issue de cette mise à jour, tous les nœuds disposant des mêmes informations pour mettre à jour le modèle comportement global, obtiennent le même modèle comportemental global référencé par GLOB_M ; et

- un module DET de détection d'anomalies, configuré exécuter une technique de détection d'anomalies utilisant le modèle comportemental global GLOB_M.

De façon connue en soi, et comme mentionné dans le document de J. Konecny, la mise à jour du modèle comportement global GLOB_M(n) (ou de façon équivalente GLOB_M) à partir des modèles comportementaux locaux maintenus par N nœuds revient à résoudre le problème suivant :

$$\min_w f(w) \text{ où } f(w) = (1/N) \sum_{n=1...N} f_n(\delta n)$$

où w désigne les paramètres du modèle comportemental global, $\delta n$ les paramètres de chaque modèle comportemental local, et f et $f_n$ des fonctions « perte » ou « erreur » entre la sortie effective de l'algorithme de détection utilisant le modèle comportemental considéré et la sortie attendue, ces fonctions dépendant de l'algorithme envisagé (ex. SVM, régression linéaire, etc.). Des exemples de fonctions erreur sont donnés pour divers algorithmes de détection dans le document sus-mentionné. Pour un algorithme SVM multi-classes tel qu'envisagé à titre illustratif ici, une fonction erreur de type fonction polynômiale, fonction sigmoïde, ou fonction RBF (pour « Radial Basis Function », en anglais), peut être utilisée.

On note que bien entendu, le modèle comportemental global GLOB_M (et l'ensemble w de paramètres le définissant) et les N modèles comportementaux locaux LOC_M(n), n=1,...,N (et les ensembles $\delta n$ de paramètres les définissant), dépendent de la nature de la technique de détection d'anomalies exécutée par les modules DET des noeuds DS. Dans le mode de réalisation décrit ici, les noeuds DS utilisent pour la détection d'anomalies, une technique d'apprentissage automatique supervisé et plus particulièrement un algorithme SVM (Machine à Vecteurs de Support) multi-classes, qui classifie le comportement des ressources surveillées par le nœud DS en une pluralité de classes comprenant une classe « normal » (regroupant les comportements considérés comme normaux), une classe « DoS » (regroupant les anomalies associées à une attaque de type Déni de Service ou DoS), une classe « Botnet » (regroupant les anomalies associées à une attaque de type Botnet), une classe « FDI » (regroupant les anomalies associées à une attaque de type Injection de Fausses Données) et une classe « autres attaques » (regroupant toutes les autres anomalies détectées non attribuables à des attaques de type DoS, Botnet ou FDI). Pour ce type d'algorithme, les paramètres w et $\delta n$, n=1,...,N sont des paramètres définissant les hyperplans séparant les différentes classes dans le modèle comportemental global GLOB_M et dans les modèles comportementaux locaux LOC_M(n).

De plus amples informations sur les algorithmes SVM sont disponibles dans le document de C-C. Chang et al. intitulé « LIBSVM : A Library for Support Vector Machines », novembre 2019 disponible sur le site https://www.csie.ntu.edu.tw/~cjlin/papers/libsvm.pdf.

Cet exemple n'est toutefois donné qu'à titre illustratif, et l'invention s'applique d'une part à d'autres classes définies pour l'algorithme SVM (par exemple celui-ci peut ne comprendre que deux classes, une classe « normal » regroupant les comportements normaux et une classe « anormal » ou « malveillant » regroupant les comportements anormaux), mais également à d'autres algorithmes d'apprentissage automatique, supervisé ou non supervisé, par renforcement, etc. L'homme du métier n'aura aucune difficulté à adapter l'enseignement décrit ci-après à ces autres algorithmes.

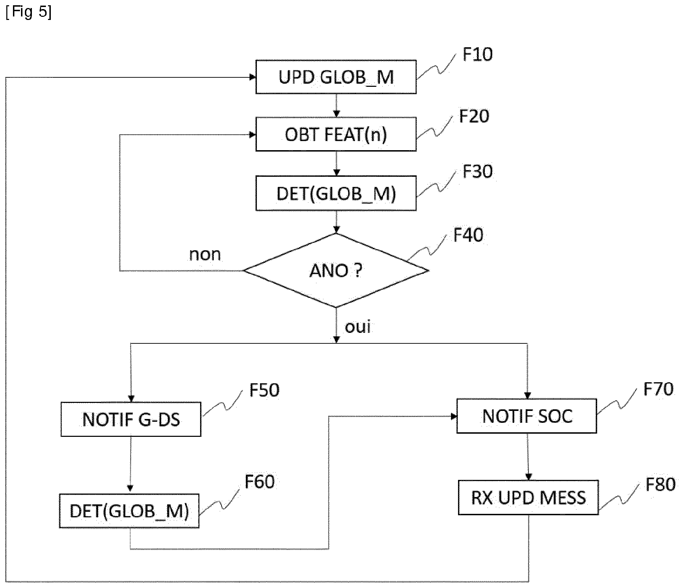

Les fonctions des modules APP et DET sont décrites plus en détail ultérieurement en référence aux figures 4 et 5.

Dans le mode de réalisation décrit ici, chaque nœud DS comprend également un module NOTIF de notification, configuré pour notifier une fonction déterminée du réseau NW lorsqu'il détecte une anomalie dans le comportement des ressources du réseau NW qu'il surveille (ex. dans le trafic échangé par ces ressources), cette notification indiquant un ou plusieurs attributs et/ou caractéristiques des ressources associés à l'anomalie détectée, l'anomalie détectée ainsi que les ressources du réseau ciblées par cette anomalie. La fonction du réseau NW notifiée diffère selon le nœud DS considéré. On envisage en effet dans le mode de réalisation décrit ici, une organisation hiérarchique, selon laquelle :

- si le nœud DS en question est le nœud G-DS hébergé par la fonction AMF du réseau NW, la fonction du réseau NW notifiée est alors l'entité de confiance SOC 2 ;
- si le nœud DS en question est un nœud L-DS, la fonction du réseau NW notifiée, est alors le nœud G-DS. Suite à cette notification, le nœud G-DS applique alors au moyen de son module DET de détection, l'algorithme SVM utilisant le modèle comportemental global GLOB_M, aux attributs et/ou caractéristiques indiqués dans la ou les notifications reçues des nœuds L-DS et aux attributs et/ou caractéristiques qu'il a lui-même collectés localement le cas échéant. Puis il notifie à son tour le résultat de cette application et l'ensemble des attributs et/ou caractéristiques qu'il a utilisés à l'entité de confiance SOC 2 pour information et/ou validation.

Le SOC 2 est configuré ici pour effectuer notamment une vérification des anomalies détectées par les différents nœuds DS (L-DS et/ou G-DS). Cette vérification peut se faire par exemple en utilisant une technique de détection plus précise et plus puissante que les nœuds DS, comme par exemple une technique d'apprentissage automatique semi-supervisée basée sur un procédé de renforcement alimenté par des experts en cyber-sécurité sollicités en particulier pour corriger les mauvaises détections du SOC 2 (ex. faux-positifs ou faux-négatifs). Il convient de noter également qu'en raison de sa position centrale dans le réseau cœur CN, le SOC 2 dispose de davantage d'informations sur les anomalies détectées, en provenance de plusieurs entités distinctes, ce qui facilite sa détection. En outre, il dispose généralement de davantage de ressources ce qui lui permet d'appliquer des techniques de détection plus gourmandes en ressources (ex. réseau de neurones, technique d'apprentissage par renforcement, etc.) mais également plus précises.

A l'issue de cette vérification, le SOC 2 peut décider de transmettre au nœud G-DS de nouvelles données d'apprentissage et/ou de nouveaux attributs et/ou de nouvelles caractéristiques à surveiller, notamment si le SOC 2 invalide une anomalie détectée par un nœud DS. Par exemple, une attaque (i.e. une anomalie) est confirmée par le SOC 2 mais la nature de l'attaque n'est pas connue des nœuds DS, ou la vérification effectuée par le SOC 2 conduit à une conclusion différente de celles remontées par les nœuds DS (ex. une attaque différente, ou l'absence d'anomalie, etc.). Bien entendu, d'autres cas peuvent être envisagés, comme par exemple, la configuration du SOC 2 par des experts en cyber-sécurité avec de nouveaux attributs et/ou caractéristiques à surveiller, avec de nouvelles données d'apprentissage, etc. Ces informations peuvent être alors exploitées par la pluralité de nœuds DS du système collaboratif 1 pour mettre à jour leurs modèles comportementaux locaux (notamment s'ils ont émis une notification en désaccord avec la vérification réalisée par le SOC 2), et *in fine* le modèle comportemental global GLOB_M.

Nous allons maintenant décrire, en référence à la **figure 4,** les principales étapes d'un procédé d'apprentissage collaboratif selon l'invention, dans un mode particulier de réalisation dans lequel il est mis en œuvre conjointement par chacun des nœuds DSn, n=1,...,N du système collaboratif 1 (incluant les nœuds L-DS et le nœud G-DS dans l'exemple envisagé ici). Ce procédé d'apprentissage automatique collaboratif est itératif (étape E00 d'initialisation à zéro d'un indice iter indexant l'itération en cours), une nouvelle itération (étape E20 d'incrémentation de l'indice iter) étant déclenchée notamment à chaque fois que de nouvelles données d'apprentissage sont disponibles au niveau d'un nœud DSn (réponse oui à l'étape test E10).

De façon générale, un nœud DSn surveille localement et continument les ressources dont il a la charge et en particulier, le trafic échangé dans son voisinage ou transitant par lui. Il collecte pour ces ressources et ce trafic une pluralité FEAT(n) d'attributs et/ou de caractéristiques, à divers instants.

La pluralité d'attributs et/ou de caractéristiques FEAT(n) collectés par le nœud DSn dépend des attaques que le module DET de détection est apte à détecter et à classifier. Ainsi, dans l'exemple envisagé ici d'attaques de type DoS, Botnet et FDI, les attributs et caractéristiques suivants sont collectés :

- *pour une attaque de type DoS*: un nombre de paquets perdus et un nombre de paquets envoyés par unité de temps par les ressources surveillées par le nœud DSn ; si le nœud DSn est un nœud L-DS hébergé par un serveur de calcul périphérique, un nombre de points d'accès communiquant simultanément avec celui-ci ; si le nœud DSn est un nœud G-DS hébergé par une fonction du réseau cœur, le nombre de serveurs de calcul périphérique communiquant simultanément avec la fonction en question du réseau cœur ; un temps de transmission d'un paquet de données par les ressources surveillées par le nœud DSn et une longueur de données brutes transmises par les ressources surveillées par le nœud DSn.

Ces attributs et caractéristiques ont été avantageusement sélectionnés par l'inventeur sur la base du constat suivant : dans un réseau 5G, une attaque de type DoS peut cibler typiquement un serveur de calcul périphérique d'un réseau de périphérie MEC. Elle est alors exécutée au niveau du réseau d'accès et vise à perturber les communications entre les points d'accès du réseau d'accès et le serveur de calcul périphérique avec pour objectif de dégrader la qualité de service, typiquement en augmentant la latence et/ou en consommant une grande quantité de bande passante, via principalement des actions de routage sélectif (ou « selective forwarding » en anglais) et/ou d'inondation (ou « flooding » en anglais). Une action de type « selective forwarding » se traduit par une suppression de paquets ou de données (ex. données brutes) déterminés, sélectionnés par l'attaquant, par exemple en liaison avec la signalisation (ex. paquets http/2) ou la détection d'attaque (ex. paquets contenant des attributs et/ou caractéristiques de trafic collectés par des sondes du réseau, etc.). Une action de type « flooding » se traduit par l'inondation du réseau avec des paquets non voulus de sorte notamment à faire tomber le serveur de calcul périphérique (par exemple en dépassant sa capacité de traitement de ces paquets. Les attributs et caractéristiques précités ont pour but de permettre de détecter un tel comportement ;

- *pour une attaque de type Botnet:* un nombre de paquets de signalisation envoyés par unité de temps par équipement utilisateur, un nombre de paquets perdus par seconde par point d'accès, une longueur de messages, un nombre d'équipements utilisateurs par point d'accès du réseau, une latence perçue par équipement utilisateur, un débit moyen perçu par équipement utilisateur.

Ces attributs et caractéristiques ont été avantageusement sélectionnés par l'inventeur sur la base du constat suivant : dans le cadre d'une attaque Botnet, les attaques sont exécutées depuis un ensemble d'équipements utilisateurs malicieux qui coopèrent entre eux avec pour but de créer une communauté de points d'accès (ex. gNodeB pour un réseau 5G) « zombies », de sorte à permettre aux attaques de pénétrer les réseaux périphériques puis le réseau cœur. Ces points d'accès ciblés par les attaques exécutent alors des attaques de type DDoS distribué (DDoS) avec pour but de faire tomber les serveurs de calcul périphérique, puis de pirater les fonctions réseau principales du réseau cœur 5G, comme par exemple les fonctions réseau AMF, SMF et UDM. Les attributs et caractéristiques précités ont pour but de permettre de détecter un tel comportement ;

- *pour une attaque de type FDI:* une distribution (ex. distance de Mahalanobis) d'un type de messages déterminé (ex. messages de signalisation ou de notification d'attaques), une puissance de signal de chaque équipement utilisateur, un nombre de paquets émis par seconde par équipement utilisateur, une latence de bout-en-bout.

Ces attributs et caractéristiques ont été avantageusement sélectionnés par l'inventeur sur la base du constat suivant : dans un scénario d'attaque de type FDI, les attaquants injectent des données fausses dans des messages légitimes et/ou diffusent des faux messages (« fake messages » en anglais) avec pour dessein de dégrader la qualité de services et d'empêcher les systèmes de détection d'intrusions d'identifier l'origine de ces attaques. Pour lancer ce type d'attaques, les attaquants doivent disposer des clés de cryptographie nécessaires pour réaliser les opérations de chiffrement et de déchiffrement mises en œuvre dans le réseau : les points d'accès, les serveurs de calcul périphérique et les fonctions réseau comme l'AMF ne sont malheureusement pas toujours en mesure de détecter l'exécution de telles attaques « internes ». Les attributs et caractéristiques précités ont pour but de permettre de détecter un tel comportement.

Bien entendu, ces attributs et caractéristiques sont évalués pour les utilisateurs et les équipements du réseau NW (ex. points d'accès, serveur MEC, équipements utilisateurs, etc.) surveillés par le nœud DSn considéré. On note que chaque nœud DSn peut collecter ces attributs et/ou caractéristiques par ses propres moyens, ou les obtenir d'autres équipements du réseau NW, comme par exemple des sondes positionnées en des endroits appropriés du réseau, etc.

Dans le mode de réalisation décrit ici, on suppose que chaque nœud DSn obtient pour plusieurs échantillons d'attributs/caractéristiques FEAT(n) collectés (chaque échantillon pouvant désigner un vecteur constitués de plusieurs attributs/caractéristiques), les labels LAB(n) des classes associées à ces échantillons d'attributs/caractéristiques, compte tenu des classes envisagées par l'algorithme de détection mis en œuvre par le nœud DSn (5 classes dans l'exemple envisagé ici de l'algorithme SVM, à savoir une classe « normal », une classe « Botnet », une classe « FDI », une classe « DoS » et une classe « autres attaques »). La combinaison des échantillons d'attributs/caractéristiques FEAT(n) et des labels LAB(n) associés constituent des données d'apprentissage LEARN(n) disponibles localement au niveau du nœud DSn. Les labels peuvent être fournis par exemple par des experts en cybersécurité (on parle alors d'apprentissage supervisé), ou comme détaillé davantage ultérieurement, par le SOC 2 (directement pour les nœuds G-DS ou indirectement via les nœuds G-DS pour les nœuds L-DS). On note que les données d'apprentissages LEARN(n) sont locales à chaque nœud DSn et diffèrent d'un nœud DSn à un autre.

L'obtention par le nœud DSn de ces données d'apprentissage LEARN(n) locales (réponse oui à l'étape E10) déclenche la mise en œuvre d'une nouvelle itération du procédé d'apprentissage selon l'invention (étape E20 d'incrémentation de l'indice iter d'itération courante). Pour faciliter la compréhension, on désigne dans la suite par $LEARN^{iter}(n)$, $FEAT^{iter}(n)$, $LAB^{iter}(n)$ les données d'apprentissage, les attributs/caractéristiques et les labels exploités durant l'itération iter. Les modèles comportementaux mis à jour conformément à l'invention lors de cette itération, ainsi que les paramètres les définissant, sont également indexés par iter.

Dans la suite de la description, on distingue la première itération (iter=1), utilisée pour l'initialisation des modèles comportementaux locaux et global, des itérations suivantes (iter>1), qui s'appuient, dans le mode de réalisation décrit ici, sur des étapes mises en œuvre de façon légèrement différente, afin d'accélérer l'apprentissage du modèle comportemental global.

Plus spécifiquement, dans le mode de réalisation décrit ici, durant la première itération (iter=1, réponse oui à l'étape test E30), le nœud DSn exécute, via son module APP d'apprentissage, un apprentissage (autrement dit une mise à jour) du modèle comportemental local LOC_M(n) qu'il maintient (par exemple stocké dans sa mémoire non volatile 6) en utilisant les nouvelles données d'apprentissage locales $LEARN^{iter}(n)$ dont il dispose (étape E40). La manière dont est réalisé un tel apprentissage à partir de données d'apprentissage est connue en soi, en particulier pour l'algorithme SVM, et n'est pas décrite en détail ici.

De façon connue en soi, et comme rappelé ci-avant, le modèle comportemental $LOC\_M^{iter}(n)$ est défini par un ensemble de paramètres, notés ici $\delta^{iter}n$, qui dans l'exemple envisagé de l'algorithme SVM multi-classes envisagé ici, définit l'hyperplan séparant les différentes classes considérées par l'algorithme SVM.

Une fois le modèle comportemental local LOC_M(n) appris avec les données d'apprentissage $LEAR\text{-}N^{iter}(n)$, le nœud DSn met à jour le modèle comportemental global $LOC\_G^{iter}(n)$.

Dans le mode de réalisation décrit ici, lors de la première itération du procédé d'apprentissage collaboratif selon l'invention, pour effectuer cette mise à jour, le nœud DSn échange d'abord ses données d'apprentissage locales $LEARN^{iter}(n)$ avec tous les autres nœuds DSk, k≠n du système collaboratif 1 par l'intermédiaire de ses moyens de communication 7 (étape E50). Cet échange peut être mis en œuvre par exemple en utilisant pour les échanges entre nœuds L-DS, des messages existants définis par le standard 3GPP, tels que décrits dans le document 3GPP TR 23.700-24, intitulé « 3GPP ; Technical Specification Group Services and System Aspect ; Study on support of the 5GMSG Service », Release 17, v1.2.0, novembre 2020, et pour les échanges entre nœuds L-DS et nœud G-DS, l'interface N2 du plan de contrôle, décrite par exemple dans le document ETSI TS 123 501, v15.3.0, septembre 2018, intitulé « 5G;System Architecture for the 5G System (3GPP TS 23.501 version 15.3.0 Release 15)».

A l'issue de cette étape E50 d'échange, les N nœuds du système collaboratif 1 disposent non seulement de leurs données d'apprentissage locales $LEARN^{iter}(n)$, mais également des données d'apprentissage locales $LEARN^{iter}(k)$, k=1,...,N, k≠n des autres nœuds du système collaboratif 1.

Puis le nœud DSn, via son module APP d'apprentissage, met en œuvre un apprentissage du modèle comportemental global GLOB_M(n), en utilisant les données d'apprentissage $LEARN^{iter}(n)$, n=1,...,N des N nœuds du système collaboratif 1 (étape E60). On note qu'à l'issue de l'étape E60, les N nœuds DS(n) du système collaboratif 1 disposent du même modèle comportemental global GLOB_M(n), n=1,...,N, soit $GLOB\_M^{iter}(1)= GLOB\_M^{iter}(2)=...= GLOB\_M^{iter}(N)= GLOB\_M^{iter}$. Ce modèle comportemental global $GLOB\_M^{iter}(n)$ est défini par les paramètres $w^{iter}n$ pour le nœud DSn tel que $w^{iter}1=w^{iter}2=...=w^{iter}N=w^{iter}$.

On note que l'échange entre les N nœuds du système collaboratif 1 de leurs données d'apprentissage à la première itération et l'apprentissage du modèle comportemental global à partir des données d'apprentissage des N nœuds du système collaboratif 1 permet de converger plus rapidement vers un modèle comportemental global GLOB_M précis pour la détection.

Lors des itérations suivantes (iter> 1, réponse non à l'étape E30), le nœud DSn met à jour, via son module APP d'apprentissage, son modèle comportemental local $LOC\_M^{iter}(n)$ et notamment ici les paramètres $\delta^{iter}n$ de ce modèle, en appliquant aux données d'apprentissage locales $LEARN^{iter}(n)$ un algorithme de descente de gradient stochastique SGD (pour « Stochastic Gradient Descent » en anglais), connu en soi, et décrit notamment dans le document de J. Konecny cité précédemment. Cet algorithme lui permet de déterminer simplement à partir du modèle comportemental local $\delta^{iter\text{-}1}n$ déterminé à l'itération précédente iter-1, et des données d'apprentissage $LEARN^{iter}(n)$, les paramètres $\delta^{iter}n$ à l'itération courante iter, par exemple en utilisant la formule suivante :

$$\delta^{iter}n= \delta^{iter\text{-}1}n-h^{iter} \, \nabla f_n(\delta^{iter\text{-}1}n)$$

où $h^{iter}$ désigne un pas de descente déterminé (qui peut varier ou non en fonction des itérations), strictement positif, le symbole $\nabla$ désigne le gradient de la fonction à laquelle il est appliqué, et $f_n$ désigne la fonction erreur introduite précédemment qui tient compte des données d'apprentissage LEARN$^{iter}$(n).

Puis, le nœud DSn informe, via ses moyens de communication 7, les N-1 autres nœuds DSk, k≠n du système collaboratif 1, de la mise à jour de son modèle comportement local LOC_M$^{iter}$(n). Plus spécifiquement, il transmet aux N-1 autres nœuds du système collaboratif 1 des informations représentatives de cette mise à jour et reçoit également lors de cet échange, des N-1 autres nœuds, les informations représentatives des mises à jour de leurs modèles comportementaux locaux respectifs LOC_M$^{iter}$(k), k≠n (étape E80).

Dans le mode de réalisation décrit ici, les informations de mise à jour transmises par chaque nœud aux autres nœuds correspondent aux paramètres $\delta^{iter}$ de son modèle comportemental local mis à jour, afin de limiter la signalisation échangée entre les nœuds.

En variante, d'autres informations de mise à jour peuvent être échangées lors de l'étape E80 entre les nœuds du système collaboratif 1, comme par exemple les modèles locaux mis à jour lors de l'itération courante ou une variation entre les paramètres $\delta^{iter}$ déterminés à l'itération iter courante et les paramètres $\delta^{iter-1}$ déterminés à l'itération iter-1 précédente (l'indice de nœud étant omis car s'appliquant à tous les nœuds du système collaboratif 1). Cette dernière variante permet avantageusement de diminuer encore la signalisation échangée entre les nœuds pour la mise en œuvre de l'invention.

Ainsi, à l'issue de l'étape E80 d'échange, les N nœuds du système collaboratif 1 disposent des paramètres $\delta^{iter}k$, k=1,...,N, des modèles comportementaux locaux maintenus par les N nœuds du système collaboratif 1.

Le nœud DSn met alors à jour le modèle comportemental global GLOB_M(n) en utilisant les paramètres $\delta^{iter}k$, k=1,...,N des modèles comportementaux locaux maintenus par les N nœuds du système collaboratif (étape E90). Il peut à cet effet, pour obtenir les paramètres $w^{iter}n$ du modèle comportemental global GLOB_M(n), moyenner les paramètres $\delta^{iter}k$ des modèles comportementaux locaux LOC_M(k), k=1,...,N, de la façon suivante :

$$w^{iter}n=(1/N)\ \Sigma_{k=1...N}\ \delta^{iter}k$$

En variante, si les nœuds DS n'exploitent pas les mêmes quantités de données d'apprentissage locales lors des mises à jour des modèles comportementaux locaux, la moyenne évaluée peut être pondérée par les quantités de données d'apprentissage disponibles au niveau de chaque nœud de la façon suivante :

$$w^{iter}n =\Sigma_{k=1...N}\ (pk/P)\ \delta^{iter}k$$

où pk désigne la dimension des données d'apprentissage LEARN(k) disponibles au niveau du nœud DSk, et P= $\Sigma_{k=1...N}$ pk. Dans cette variante, lors de l'échange des informations représentatives des mises à jour des modèles comportementaux locaux, les nœuds DS s'échangent également les valeurs des dimensions pk, k=1,...,N.

Ainsi, à l'issue de l'étape E90, les N nœuds du système collaboratif 1 disposent des mêmes paramètres $w^{iter}1= w^{iter}2=...\ w^{iter}N=w^{iter}$ et donc du même modèle comportemental global GLOB_M.

En variante, si les informations de mise à jour échangées entre les nœuds du système collaboratif 1 correspondent aux variations $\Delta\delta^{iter}k$ des paramètres des modèles comportementaux locaux entre les itérations iter et iter-1 ($\Delta\delta^{iter}k=\delta^{iter}k-\delta^{iter-1}k$), les paramètres $w^{iter}n$ du modèle comportement global estimés au niveau du nœud DSn sont obtenus selon :

$$w^{iter}n= w^{iter-1}n+(1/N)\ \Sigma_{k=1...N}\Delta\delta^{iter}k$$

ou selon

$$w^{iter}n= w^{iter-1}n+\Sigma_{k=1...N}\ (pk/P)\ \Delta\delta^{iter}k$$

selon la variante envisagée.

Une nouvelle itération (étape d'incrémentation E20) comprenant les étapes E70 à E90 est exécutée par le nœud DSn lorsque celui-ci dispose de nouvelles données d'apprentissage (ou d'au moins une quantité pn déterminée de nouvelles données d'apprentissage), tant que $w^{iter}\neq w^{iter-1}$ pour un nombre d'itérations prédéterminé (c'est-à-dire tant que le modèle comportemental global n'a pas convergé vers une version stable et précise), ce nombre pouvant être supérieur ou égal à 1.

Dans le mode de réalisation décrit ici, lors de la première itération du procédé d'apprentissage, les nœuds du système collaboratif 1 s'échangent leurs données d'apprentissage, puis lors des itérations suivantes, uniquement des informations de mise à jour de leurs modèles comportementaux locaux (ex. paramètres mis à jour ou variation de ces paramètres). Comme mentionné précédemment, cela permet avantageusement une convergence plus rapide du modèle comportemental global vers un modèle précis et efficace pour la détection d'anomalies dans le réseau NW. Toutefois, en variante, on peut envisager que toutes les itérations soient conduites de façon identique selon la procédure décrite en référence aux étapes E70 à E90.

Comme indiqué ci-dessus, à l'issue de chaque itération, chaque nœud DSn, n=1,...,N du système collaboratif 1, dispose d'un modèle comportemental global GLOB_M partagé avec l'ensemble des nœuds du système collaboratif 1. Nous allons maintenant décrire, en référence à la **figure 5,** comment dans un mode particulier de réalisation, chaque nœud DSn exploite ce modèle comportemental global GLOB_M pour surveiller les ressources du réseau NW dont il est en charge d'assurer la protection. Plus spécifiquement, la figure 5 décrit, dans un mode particulier de réalisation, les principales étapes d'un procédé de surveillance selon l'invention tel qu'il est mis en œuvre par un (chaque) nœud DSn du réseau NW.

On suppose ici que le nœud DSn considéré a collecté de nouvelles données d'apprentissage LEARN(n) et exécuté un apprentissage (mise à jour) du modèle comportemental global GLOB_M(n)=GLOB_M au moyen de son module APP d'apprentissage conformément à l'invention, et comme décrit précédemment en référence à la figure 4 (étape F10). Le modèle comportemental global GLOB_M ainsi mis à jour est fourni au module DET de détection du nœud DSn et mémorisé dans la mémoire non volatile 6 du nœud DSn.

Comme mentionné ci-avant, le nœud DSn surveille de façon continue les ressources du réseau dont il est en charge et collecte à cet effet les attributs et/ou caractéristiques FEAT(n) décrits précédemment, associés à ces ressources (étape F20). Il peut obtenir ces attributs et/ou caractéristiques FEAT(n) directement ou par l'intermédiaire de sondes positionnées de manière appropriée dans le réseau NW pour lui permettre de collecter ces attributs et/ou caractéristiques FEAT(n). Ainsi, à titre illustratif, lors de cette étape F20, chaque nœud L-DS surveille le trafic échangé à proximité du serveur MEC sur lequel il est déployé, tandis que le nœud G-DS surveille le trafic échangé dans le réseau cœur CN à proximité de l'équipement embarquant la fonction AMF sur lequel il est déployé.

Ces attributs et/ou caractéristiques FEAT(n) sont fournis à son module DET de détection. Le module DET de détection applique alors sur les attributs et/ou caractéristiques FEAT(n) une technique de détection d'anomalie utilisant le modèle comportemental global GLOB_M (étape F30).

Si aucune anomalie n'est détectée lors de cette application (réponse non à l'étape test F40), autrement dit le module DET associe aux attributs et/ou caractéristiques FEAT(n) la classe « normal », aucune alerte n'est remontée par le nœud DSn (retour à l'étape F20 pour traiter les prochains attributs et/ou caractéristiques collectés par le nœud DSn).

Si au contraire une anomalie est détectée (réponse oui à l'étape test F40), autrement dit le module DET associe aux attributs et/ou caractéristiques FEAT(n) une classe « DoS », « FDI », « Botnet » ou « autres attaques », alors le nœud DSn via son module NOTIF de notification, notifie une fonction déterminée du réseau NW de l'anomalie détecté en lui envoyant un message d'alerte. Ce message d'alerte contient ici les attributs et/ou caractéristiques FEAT(n) ayant permis de détecter cette anomalie, l'anomalie détecté (i.e. la classe de l'attaque détecté par l'algorithme SVM) ainsi que les identifiants des ressources protégées par le nœud DSn visées par l'anomalie détecté (ex. gNodeB(s) ou équipement utilisateur(s) pour un nœud L-DS).

Comme évoqué précédemment, dans le mode de réalisation décrit ici, selon la nature de l'équipement du réseau NW hébergeant le nœud DSn, la fonction du réseau notifiée et la gestion du message d'alerte remonté par le nœud DSn diffèrent.

Ainsi, si le nœud DSn est un nœud L-DS hébergé par un serveur MEC, la fonction du réseau NW notifiée est un nœud G-DS hébergé dans la fonction AMF du réseau cœur CN (étape F50). Si plusieurs messages d'alerte ont été remontés au nœud G-DS de la part de plusieurs nœuds L-DS distincts, le nœud G-DS agrège les informations remontées dans les messages d'alerte avant d'activer son module DET de détection. Le module DET de détection exécute la technique de détection d'anomalies avec laquelle il est configuré en utilisant le modèle GLOB_M appris lors de l'étape F10, ladite technique de détection d'anomalies étant appliquée sur les attributs/caractéristiques remontés dans le ou les messages d'alerte reçus du ou des nœuds L-DS et sur les attributs/caractéristiques FEATn collectés par le nœud G-DS lui-même dans son propre voisinage sur les ressources qu'il surveille (étape F60).

On note que le nœud G-DS, bénéficiant d'attributs/caractéristiques recueillis par plusieurs entités (le ou les nœuds L-DS remontant une anomalie et le nœud G-DS lui-même) peut conclure à une détection différente de celle(s) qui lui est (sont) remontée(s) (par exemple à une autre classe d'anomalies). Le nœud G-DS transmet le résultat de l'application de la technique de détection par son module DET de détection dans un message d'alerte au SOC 2 via son module NOTIF de notification, ce message d'alerte comprenant les informations remontées par le(s) nœud(s) L-DS, ses propres attributs/caractéristiques, les identifiants des ressources visées par l'attaque détecté par le nœud G-DS ainsi que le label de l'attaque qu'il a déterminé (étape F70).

Lorsqu'une anomalie est détecté au cours de l'étape F30 par le nœud DSn, si le nœud DSn est un nœud G-DS hébergé dans la fonction AMF du réseau cœur CN, la fonction du réseau NW notifiée est directement ici le SOC 2 (étape F70). Le SOC 2 peut alors soit appliquer une technique de détection d'anomalies aux informations remontées par le nœud G-DS (par exemple s'appuyant sur une technique d'apprentissage automatique plus précise que les techniques utilisant le modèle comportemental GLOB_M), soit s'en remettre à des experts en cyber-sécurité pour confirmer ou infirmer les anomalies détectées par les nœuds du système collaboratif 1, soit une combinaison de ces deux possibilités. Il convient de noter que le SOC 2 peut être relié à une pluralité de nœuds G-DS et peut donc bénéficier, en plus des données fournies par les experts en cyber-sécurité, des informations remontées par ces différents nœuds. Ceci lui permet de disposer d'un modèle comportemental plus précis que le modèle GLOB_M.

Si l'anomalie est confirmée par le SOC 2, mais qu'une nouvelle attaque inconnue des nœuds DS (i.e. ne correspondant pas à une classe d'attaques déjà connues du modèle GLOB_M, à savoir ici « DoS », « FDI » ou « Botnet ») est détectée par le SOC 2, le SOC 2 transmet au nœud G-DS un message de mise à jour contenant de nouvelles données d'apprentissage et/ou de nouveaux attributs et/ou caractéristiques à surveiller permettant de détecter cette nouvelle attaque, le label associé à cette nouvelle attaque, pour mettre à jour le modèle comportemental global GLOB_M et *in fine,* les modèles comportementaux locaux LOC_M (étape F80). Le nœud G-DS peut alors à son tour relayer ce message de mise à jour vers les nœuds L-DS auxquels il est connecté.

Il en est de même si l'anomalie détectée par les nœuds L-DS et G-DS du système collaboratif 1 n'est pas confirmée par le SOC 2 (par exemple, le SOC 2 ne détecte pas d'attaques au vu des informations remontées par les nœuds L-DS).

En outre, en cas d'anomalie confirmée, le SOC 2 peut déclencher une action de mitigation de l'attaque associée à l'anomalie détectée. Une telle action est par exemple un remplacement ou une éviction des ressources visées par l'attaque, etc.

La réception des nouvelles données d'apprentissage et/ou des nouveaux attributs et/ou caractéristiques à surveiller par le nœud G-DS déclenche une nouvelle phase d'apprentissage du modèle GLOB_M en appliquant le procédé d'apprentissage collaboratif selon l'invention (étape F10).

Dans le mode de réalisation décrit ici, pour assurer encore davantage la protection du réseau NW, une valeur de confiance est associée à chaque nœud DS du système collaboratif 1 permettant de détecter si un nœud DS (L-DS ou G-DS dans l'exemple envisagé ici) est ciblé ou non par une attaque.

Plus particulièrement, la valeur de confiance $\gamma$ associée à un nœud DS (L-DS ou G-DS) est calculée de la façon suivante, par exemple par le SOC 2 (et éventuellement transmise au nœud G-DS) :

$$\gamma = \frac{R_+^{DS} - R_-^{DS}}{N^{DS}}$$

où $R_+^{DS}$, $R_-^{DS}$ et $N^{DS}$ désignent respectivement le nombre de fois où le SOC 2 a confirmé l'anomalie détectée par le nœud DS, le nombre de fois où le SOC 2 a infirmé l'anomalie détectée par le nœud DS et le nombre de fois où une notification a été émise directement ou indirectement (i.e. via un nœud G-DS) vers le SOC 2 contenant une anomalie détectée par le nœud DS.

Cette valeur de confiance varie dans le temps et peut être utilisée par le nœud G-DS ou par le SOC 2 pour déterminer la fiabilité des détections réalisées par les nœuds DS du système collaboratif 1. Si la valeur de confiance associée à un nœud DS est inférieure en effet à un seuil déterminé (par exemple 0.5), alors le nœud DS en question est considéré comme peu fiable et potentiellement ciblé par une attaque informatique. Dans ce cas, la détection réalisée par ce nœud peut ne pas être prise en compte par le nœud G-DS ou par le SOC 2 suivant le nœud concerné. Le seuil peut varier en fonction du niveau de sécurité que les experts en cyber-sécurité souhaitent assurer dans le réseau NW (par exemple, si le seuil est élevé, cela peut engendrer un taux de faux positifs élevé, alors que s'il est choisi bas, il se peut que des attaques affectant les nœuds DS ne soient pas détectées impactant la sécurité du réseau NW). Un compromis entre ces deux aspects doit donc être pris en compte par les experts en cyber-sécurité lors de la fixation du seuil.

**Revendications**

1. Procédé d'apprentissage collaboratif, entre une pluralité de noeuds appartenant à un réseau (NW) de télécommunications, d'un modèle comportemental dit global (GLOB_M) destiné à être utilisé par chaque nœud (L-DS,G-DS) pour détecter des anomalies affectant ledit réseau, ledit procédé étant mis en oeuvre par chaque nœud de ladite pluralité de nœuds et comprenant, lorsque de nouvelles données d'apprentissage sont disponibles au niveau de ce nœud (E10) :

    - une étape (E70) de mise à jour, à partir desdites nouvelles données d'apprentissage, d'un modèle comportemental dit local (LOC_M(n)) maintenu par ledit nœud ;
    - une étape (E80) d'échange avec les autres nœuds de ladite pluralité de nœuds d'informations représentatives des mises à jour des modèles comportementaux locaux maintenus respectivement par ladite pluralité de nœuds, lesdites informations
    représentatives des mises à jour étant des paramètres définissant lesdits modèles comportementaux locaux après lesdites mises à jour ou des variations de ces paramètres en raison desdites mises à jour ; et
    - une étape (E90) de mise à jour du modèle comportemental global (GLOB_M) à partir d'une moyenne ou d'une moyenne pondérée des informations échangées
    représentatives des mises à jour des modèles comportementaux locaux.

2. Procédé d'apprentissage collaboratif selon la revendication 1 dans lequel l'étape de mise à jour (E30) du modèle comportemental local (LOC_M(n)) comprend l'exécution par ledit nœud d'un algorithme de descente de gradient stochastique.

3. Procédé d'apprentissage collaboratif selon la revendication 1 ou 2 comprenant une étape d'initialisation du modèle comportemental global (GLOB_M) comportant :

- une étape (E50) d'obtention de données d'apprentissage en provenance desdits autres nœuds de ladite pluralité de nœuds ; et
- une étape (E60) d'apprentissage du modèle comportemental global à partir de données d'apprentissage disponibles au niveau dudit nœud et desdites données d'apprentissage obtenues desdits autres nœuds.

4. Procédé d'apprentissage collaboratif selon l'une quelconque des revendications 1 à 3 dans lequel lesdites données d'apprentissage portent sur au moins un attribut et/ou une caractéristique parmi un nombre de paquets perdus par unité de temps, un nombre de paquets envoyés par unité de temps, un nombre de points d'accès communiquant simultanément avec un serveur de calcul périphérique du réseau, un nombre de serveurs de calcul périphérique communiquant simultanément avec une fonction du réseau déterminée, un temps de transmission d'un paquet de données, une longueur de données brutes transmises, un nombre de paquets de signalisation envoyés par unité de temps par un équipement utilisateur, un nombre de paquets perdus par seconde par un point d'accès audit réseau, une longueur de messages, un nombre d'équipements utilisateurs connectés à un point d'accès audit réseau, une latence perçue par un équipement utilisateur, un débit moyen perçu par un équipement utilisateur, une distribution d'un type de messages déterminé, un puissance de signal d'un équipement utilisateur, un nombre de paquets émis par seconde, et/ou une latence de bout-en-bout dans le réseau.

5. Procédé d'apprentissage collaboratif selon l'une quelconque des revendications 1 à 4 dans lequel ledit modèle comportemental global (GLOB_M) est utilisé par ledit nœud pour mettre en oeuvre un algorithme d'apprentissage automatique supervisé, non-supervisé ou par renforcement.

6. Procédé d'apprentissage collaboratif selon la revendication 6 dans lequel ledit algorithme d'apprentissage automatique est un algorithme de type machine à vecteurs de support.

7. Procédé de surveillance par un nœud (L-DS,G-DS) appartenant à une pluralité de nœuds d'un réseau (NW) de télécommunications, comprenant :

- une étape (F10) d'apprentissage d'un modèle comportemental global (GLOB_M) au moyen d'un procédé d'apprentissage collaboratif entre ladite pluralité de nœuds conforme à l'une quelconque des revendications 1 à 6 ; et
- une étape (F30) d'exécution d'une technique de détection d'anomalies utilisant ledit modèle comportemental global (GLOB_M).

8. Procédé de surveillance selon la revendication 7 comprenant, si une anomalie est détectée lors de ladite étape d'exécution, une étape (F50,F70) de notification d'une fonction (G-DS,2) déterminée du réseau de l'anomalie détectée, ladite notification indiquant au moins un attribut et/ou une caractéristique associé(e) à ladite anomalie détectée.

9. Procédé de surveillance selon la revendication 8 comprenant, suite à l'étape de notification :

- une étape (F80) de réception en provenance de ladite fonction déterminée (G-DS,2) du réseau, de nouveaux éléments parmi de nouvelles données d'apprentissage et/ou de nouveaux attributs et/ou caractéristiques à surveiller ; et
- une étape (F10,E10) de déclenchement du procédé d'apprentissage collaboratif selon l'une quelconque des revendications 1 à 6 en exploitant lesdits nouveaux éléments reçus.

10. Nœud (L-DS,G-DS) parmi une pluralité de nœuds appartenant à un réseau de télécommunications, comprenant un module (DET) de détection d'anomalies, configuré pour exécuter une technique de détection d'anomalies utilisant un modèle comportemental dit global (GLOB_M), ledit nœud comprenant en outre un module (APP) d'apprentissage, configuré pour réaliser un apprentissage collaboratif dudit modèle comportemental global avec d'autres nœuds de ladite pluralité de nœuds, ledit module d'apprentissage (APP) étant activé lorsque de nouvelles données d'apprentissage sont disponibles au niveau dudit nœud, et étant configuré pour :

- mettre à jour, à partir desdites nouvelles données d'apprentissage, un modèle comportemental dit local (LOC_M(n)) maintenu par ledit nœud ;
- échanger avec les autres nœuds de ladite pluralité de nœuds d'informations représentatives des mises à jour des modèles comportementaux locaux maintenus respectivement par ladite pluralité de nœuds, lesdites informations représentatives des mises à jour étant des paramètres définissant lesdits modèles comportementaux locaux après lesdites mises à jour ou des variations de ces paramètres en raison desdites mises à jour ; et

- mettre à jour le modèle comportemental global (GLOB_M) à partir d'une moyenne ou d'une moyenne pondérée des informations échangées représentatives des mises à jour des modèles comportementaux locaux.

**11.** Système collaboratif (1) comprenant une pluralité de noeuds (L-DS,G-DS) selon la revendication 10.

**12.** Système collaboratif (1) selon la revendication 11 dans lequel, parmi ladite pluralité de noeuds, plusieurs noeuds (L-DS) sont embarqués dans des serveurs de calcul périphérique dudit réseau et au moins un nœud (G-DS) est embarqué dans une entité de gestion de la mobilité et de l'accès dudit réseau, ledit système collaboratif comprenant en outre une entité (2) de confiance configurée pour effectuer une vérification des anomalies détectées par ladite pluralité de noeuds et/ou fournir audit au moins un nœud (G-DS) embarqué dans l'entité de gestion de la mobilité et de l'accès du réseau de nouveaux éléments parmi de nouvelles données d'apprentissage et/ou de nouveaux attributs et/ou caractéristiques à surveiller.

**13.** Système collaboratif selon la revendication 12 dans lequel l'entité (2) de confiance est configurée pour fournir lesdits nouveaux éléments lorsque qu'elle invalide au moins une anomalie détectée par un nœud.

**14.** Système collaboratif (1) selon l'une quelconque des revendications 11 à 13 dans lequel chaque nœud de ladite pluralité de nœuds est associé à une valeur de confiance.

[Fig 1]

[Fig 2]

[Fig 3]

[Fig 4]

[Fig 5]

| Europäisches Patentamt European Patent Office Office européen des brevets | **RAPPORT DE RECHERCHE EUROPEENNE** | Numéro de la demande EP 21 21 6488 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/193693 A1 (VASSEUR JEAN-PHILIPPE [FR] ET AL) 9 juillet 2015 (2015-07-09) * alinéa [0013] - alinéa [0018]; figures 6A-9 * * alinéa [0038] - alinéa [0048] * * alinéa [0067] - alinéa [0096] * ----- | 1-12,14 | INV. H04W12/121 G06N3/04 G06N20/20 H04L9/40 |
| X | US 2017/279834 A1 (VASSEUR JEAN-PHILIPPE [US] ET AL) 28 septembre 2017 (2017-09-28) * alinéa [0040] - alinéa [0048]; figure 4 * * alinéa [0060] - alinéa [0066] * * alinéa [0078] * * alinéa [0147] * ----- | 1-14 | |
| A | ALBERTO BLANCO-JUSTICIA ET AL: "Achieving Security and Privacy in Federated Learning Systems: Survey, Research Challenges and Future Directions", ARXIV.ORG, CORNELL UNIVERSITY LIBRARY, 201 OLIN LIBRARY CORNELL UNIVERSITY ITHACA, NY 14853, 12 décembre 2020 (2020-12-12), XP081836916, * le document en entier * ----- | 1-14 | |
| A | LIU YI ET AL: "Federated learning for 6G communications: Challenges, methods, and future directions", CHINA COMMUNICATIONS, CHINA INSTITUTE OF COMMUNICATIONS, PISCATAWAY, NJ, USA, vol. 17, no. 9, 1 septembre 2020 (2020-09-01), pages 105-118, XP011811378, ISSN: 1673-5447, DOI: 10.23919/JCC.2020.09.009 [extrait le 2020-09-25] * le document en entier * ----- | 1-14 | |

**DOMAINES TECHNIQUES RECHERCHES (IPC)**

H04L
H04W
G06N

-/--

Le présent rapport a été établi pour toutes les revendications

| Lieu de la recherche | Date d'achèvement de la recherche | Examinateur |
|---|---|---|
| Berlin | 27 avril 2022 | Figiel, Barbara |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 21 21 6488

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LIM WEI YANG BRYAN ET AL: "Federated Learning in Mobile Edge Networks: A Comprehensive Survey", IEEE COMMUNICATIONS SURVEYS & TUTORIALS, IEEE, USA, vol. 22, no. 3, 7 avril 2020 (2020-04-07), pages 2031-2063, XP011807015, DOI: 10.1109/COMST.2020.2986024 * le document en entier * ----- | 1-14 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Berlin | 27 avril 2022 | Figiel, Barbara |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 2 de 2

**ANNEXE AU RAPPORT DE RECHERCHE EUROPEENNE
RELATIF A LA DEMANDE DE BREVET EUROPEEN NO.**

EP 21 21 6488

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-04-2022

| Document brevet cité au rapport de recherche | Date de publication | Membre(s) de la famille de brevet(s) | Date de publication |
|---|---|---|---|
| US 2015193693 A1 | 09-07-2015 | US 2015193693 A1 | 09-07-2015 |
| | | US 2015193696 A1 | 09-07-2015 |
| | | US 2015193697 A1 | 09-07-2015 |
| | | US 2015195145 A1 | 09-07-2015 |
| | | US 2015195146 A1 | 09-07-2015 |
| | | US 2015195296 A1 | 09-07-2015 |
| US 2017279834 A1 | 28-09-2017 | US 2017279834 A1 | 28-09-2017 |
| | | US 2017279835 A1 | 28-09-2017 |

EPO FORM P0460

Pour tout renseignement concernant cette annexe : voir Journal Officiel de l'Office européen des brevets, No.12/82

**EP 4 021 051 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. KONEČNÝ et al.** Federated Optimization: Distributed Machine-Learning for On-Device Intelligence. *arXiv preprint arXiv :1610.02527v1,* 08 Octobre 2016
- **C-C. CHANG et al.** *LIBSVM : A Library for Support Vector Machines,* Novembre 2019, https://www.csie.ntu.edu.tw/~cjlin/papers/libsvm.pdf
- 3GPP ; Technical Specification Group Services and System Aspect ; Study on support of the 5GMSG Service. *3GPP TR 23.700-24,* Novembre 2020
- 5G;System Architecture for the 5G System (3GPP TS 23.501 version 15.3.0 Release 15). *TS 123 501,* Septembre 2018